# EUROPÄISCHE PATENTSCHRIFT

(11) **EP 1 393 978 B1**
(45) Veröffentlichungstag und Bekanntmachung des Hinweises auf die Patenterteilung: **13.10.2010**
(21) Anmeldenummer: 03018075.6
(22) Anmeldetag: 08.08.2003
(51) Int. Cl.: B60R 5/04, B60R 21/06

(54) **Einbaueinheit für ein Kraftfahrzeug**
Vehicle mounting unit
Unité de montage pour un véhicule

(30) Priorität: 19.08.2002 DE 10238613
(43) Veröffentlichungstag der Anmeldung: 03.03.2004
(73) Patentinhaber: BOS GmbH & Co. KG, 73760 Ostfildern (DE)
(72) Erfinder: Kobiela, Andreas, 72654 Neckartenzlingen (DE); Seeg, Thomas, 73760 Ostfildern (DE); Schlecht, Werner P., 71665 Vaihingen/Enz (DE)
(74) Vertreter: Patentanwälte Ruff, Wilhelm, Beier, Dauster & Partner

(56) Entgegenhaltungen:
- DE-U- 29 716 241
- US-A- 4 587 695
- PATENT ABSTRACTS OF JAPAN vol. 1997, no. 07, 31. Juli 1997 (1997-07-31) & JP 09 086280 A (KASAI KOGYO CO LTD;NHK SPRING CO LTD), 31. März 1997 (1997-03-31)
- PATENT ABSTRACTS OF JAPAN vol. 1999, no. 03, 31. März 1999 (1999-03-31) & JP 10 329610 A (NISSAN MOTOR CO LTD;KASAI KOGYO CO LTD; NHK SPRING CO LTD), 15. Dezember 1998 (1998-12-15)

## Beschreibung

Die Erfindung betrifft eine Einbaueinheit für ein Kraftfahrzeug, die mit mindestens einer fahrzeugfesten Haltevorrichtung mittels mindestens einer Riegeleinrichtung lösbar verbunden ist, die jeweils mindestens zwei Riegel aufweist, die in unterschiedlichen Richtungen beweglich gelagert sind.

Einbaueinheiten für Kraftfahrzeuge sind in vielfältigen Ausführungen bekannt. Weite Verbreitung finden sie insbesondere als Kassettengehäuse für Sonnenschutzrollos oder Sicherheitsnetze zur Laderaumabtrennung. Andere Anwendungen wie die Aufnahme von Lüftungs-, Klima-, Sound- oder Sicherheitssystemen sind ebenfalls denkbar. Um für die Nutzung eines Kraftfahrzeuginnenraums eine größtmögliche Variabilität zu ermöglichen, werden Einbaueinheiten häufig mittels Riegeleinrichtungen, die insbesondere werkzeuglos lösbar sind, mit fahrzeugfesten Haltevorrichtungen verbunden. Dabei wird ein Verriegelungszustand angestrebt, bei dem die Einbaueinheit zumindest derartig mit dem Kraftfahrzeug kraftübertragend verbunden ist, dass in einem allgemeinen Betriebszustand des Kraftfahrzeuges, insbesondere im normalen Fahrbetrieb ohne weitere äußere Einwirkungen, die auf die Einbaueinheit einwirkenden Kräfte nicht zu einem Lösen des Verriegelungszustandes führen können. Fahrzeugfeste Haltevorrichtungen sind unmittelbar an der Karosserie angebracht, insbesondere sind sie in die tragende Struktur der Karosserie integriert, oder mittelbar über Verbindungsmittel mit der Karosserie verbunden.

Aus der JP 09086280 ist eine Verriegelung für eine Einbaueinheit bekannt, bei der eine in einem Endbereich eines Kassettengehäuses vorgesehene Riegeleinrichtung zwei gegenläufig bewegbare Riegel aufweist, die jeweils in orthogonaler Richtung zu einer Mittellängsachse der Einbaueinheit bewegbar sind. Die Riegel sind mittels Federn in eine Riegelposition vorgespannt und können durch Aufbringen einer Verriegelungskraft bzw. Entriegelungskraft in eine Freigabeposition gebracht werden. Eine fahrzeugfeste Haltevorrichtung ist mit gegenüberliegend angebrachten Hinterschnitten versehen, um die Riegel formschlüssig aufnehmen zu können.

Die JP 10329610 zeigt eine Einbaueinheit mit einer zwangsgesteuerten Riegeleinheit, bei der zwei gegenläufig bewegbare Riegel mittels einer gemeinsamen Riegeltaste ansteuerbar sind und entgegen einer Federkraft aus einer Riegelposition in eine Freigabeposition gebracht werden können. Die Riegel sind jeweils mit einer Führungskulisse versehen, in die ein Führungsstift eingreift, der mit der Riegeltaste gekoppelt ist und der bei einer Bewegung der Riegeltaste eine Bewegung des Riegels hervorruft. Die Riegel sind für eine formschlüssige Aufnahme in einer mit korrespondierend zu den Riegeln gestalteten, an gegenüberliegenden Wandabschnitten angeordneten Ausnehmungen versehenen fahrzeugfesten Haltevorrichtung vorgesehen.

Aus der DE 297 16 241 U1 ist eine Laderaum-Trennvorrichtung bekannt, bei der zwei parallel bewegbare Riegelzapfen stirnseitig an einem Rollogehäuse angebracht sind und aus einer Funktionsstellung in eine Freigabestellung gebracht werden können. Die Riegelzapfen sind jeweils von Druckfedern in der Funktionsstellung gehalten und können durch Aufbringung einer Betätigungskraft auf eine Druckbetätigungsfläche linearbeweglich in einer Parallelbewegung in die Freigabestellung gebracht werden.

Die Aufgabe der Erfindung besteht darin, eine Einbaueinheit der eingangs genannten Art zu schaffen, die eine sichere fahrzeugseitige Verankerung auch bei starken Fahrzeugaufprallbelastungen ermöglicht.

Diese Aufgabe wird dadurch gelöst, dass drei Riegel vorgesehen sind, von denen einer stirnseitig an der Einbaueinheit angeordnet ist und zwei einander gegenüberliegende Riegel senkrecht zu einer Haupterstreckungsrichtung der Einbaueinheit ausgerichtet sind. Die Riegeleinrichtung, die insbesondere durch Kraft- und/oder Formschluss eine kraftübertragende Verbindung zwischen der Einbaueinheit und der fahrzeugfesten Haltevorrichtung herstellt, weist erfindungsgemäß drei Riegel auf, wobei jeder Riegel zumindest in einer Raumrichtung eine Kraftübertragung erlaubt. Durch die drei in unterschiedlichen Richtungen beweglichen Riegel sind räumlich unterschiedliche Kräfte und Belastungen gut ausgleichbar, so dass sich eine verbesserte Verankerung ergibt. Typische Riegelbauformen sind insbesondere formschlüssig wirkende Bolzen, Haken oder Schieber. Durch den gemeinsamen Eingriff einer Riegeleinheit mittels dreier Riegel wird erreicht, dass gegenüber einem einzelnen Riegel einer vergleichbaren Riegelbauform eine verbesserte Verankerung erzielt wird, insbesondere zumindest eine Kraft- oder Drehmomentkomponente zusätzlich abgefangen werden kann. Dadurch wird bei geringem Aufwand eine deutliche Verbesserung der kraftübertragenden Verbindung der Einbaueinheit mit der fahrzeugfesten Haltevorrichtung erzielt.

In Ausgestaltung der Erfindung sind die die Riegel unabhängig voneinander beweglich gelagert. Dadurch kann gewährleistet werden, dass das Lösen oder Herstellen der kraftübertragenden Verbindung zwischen der Einbaueinheit und der fahrzeugfesten Haltevorrichtung besonders einfach gestaltet werden kann, insbesondere wenn durch bauliche Voraussetzungen einer der Riegel früher in den Verriegelungszustand gebracht werden muss als der oder die anderen Riegel oder wenn einer der Riegel betragsmäßig eine größere Bewegung als der oder die anderen Riegel vollführen soll. Durch geeignete Dimensionierung der Riegeleinrichtung kann insbesondere bei einem Unfall des Kraftfahrzeuges verhindert werden, dass die auf die Karosserie des Kraftfahrzeuges wirkenden Deformationskräfte und Momente zu einer Entriegelung der Einbaueinheit führen.

In weiterer Ausgestaltung der Erfindung ist mindestens ein Riegel durch eine Führungseinrichtung derart angesteuert, dass er eine lineare und/oder rotatorische Verriegelungsbewegung durchführt. Eine Führungseinrichtung beschränkt über Führungsmittel, insbesondere Gleitführungen oder Kugelführungen, die Beweglichkeit des Riegels und führt sowohl Betätigungskräfte, die vom Fahrzeugbenutzer aufgebracht werden als auch Reaktionskräfte, die beim Gebrauch der Einbaueinheit auftreten, derart ab, dass ungewollte Riegelbewegungen im wesentlichen verhindert werden. Die Art der Bewegung des Riegels hängt von dessen Bauform ab. Während Bolzen und Schieber für eine lineare Bewegung zur Erzeugung eines Formschlusses geeignet sind, ist insbesondere bei Haken und Schnapphaken von einer kombinierten linearen und rotatorischen Bewegung auszugehen. Dagegen werden insbesondere T-förmige Riegel durch eine in der Befestigungsstelle vorgesehene Öffnung linear hindurchgeführt, anschließend wird durch eine rotatorische Verriegelungsbewegung ein Formschluss mit der Befestigungsstelle durch Hintergreifen eines geeigneten Bereiches verwirklicht. Vorstellbar ist auch eine schraubenartige Verriegelung, bei der ein Riegel durch eine kombinierte lineare und rotatorische Verriegelungsbewegung in eine entsprechende Aufnahme in der Befestigungsstelle eingeschraubt wird, womit eine besonders zuverlässige Verbindung erzielt wird.

In weiterer Ausgestaltung der Erfindung weist die Führungseinrichtung eine Betätigungseinheit auf, die den Riegel zur Ver- und/oder Entriegelung kraft- und/oder formschlüssig ansteuert. Die Betätigungseinheit dient zur Übertragung einer vom Fahrzeugbenutzer aufgebrachten Bedienkraft auf mindestens einen Riegel der Riegeleinrichtung, wobei die Betätigungseinheit insbesondere ein Hebel, ein Drehknopf, eine Taste oder eine Zugschlaufe sein kann. Die vom Fahrzeugbenutzer aufgebrachte Bedienkraft oder ein entsprechendes Bedienmoment wird durch die Betätigungseinheit entweder unmittelbar auf den Riegel übertragen oder durch die Führungseinrichtung in eine andere Kraft- oder Molentenform überführt, um dann mittelbar auf den Riegel zu wirken.

Die Kraftübertragung auf einen Riegel kann abhängig von geometrischen Erfordernissen und von einem Bedienkonzept, das insbesondere eine zeitliche Aufeinanderfolge der verschiedenen Ver- oder Entriegelungsbewegungen beinhaltet, formschlüssig und/oder kraftschlüssig erfolgen. Eine Kombination aus Form- und Kraftschluss kann insbesondere dann zur Anwendung gebracht werden, wenn verhindert werden soll, dass der Fahrzeugbenutzer durch zu hohe Bedienkräfte an der Betätigungseinheit eine Überlastung der Riegeleinrichtung hervorruft. In besonders vorteilhafter Weise wird dies dadurch erzielt, dass die Verriegelungsbewegung kraftschlüssig stattfindet, wobei eine Begrenzung der übertragenen Kraft auf den Riegel realisiert werden kann. Die Entriegelungsbewegung wird durch ein formschlüssig wirkendes Element hervorgerufen.

In weiterer Ausgestaltung der Erfindung weist die Betätigungseinheit Zwangssteuerungsmittel auf, die zur Ver- und/oder Entriegelung auf den mindestens einen Riegel wirken. Bei einer Zwangssteuerung, insbesondere einer Kulissenführung, einem Spindeltrieb oder einem Getriebe, besteht eine feste Verbindung zwischen der Betätigungseinheit und dem Riegel. Zwangssteuerungsmittel bewirken als Teil der Führungseinrichtung, dass der Riegel keinen Freiheitsgrad der Bewegung mehr hat, sofern keine aktive Betätigung der Betätigungseinheit vorliegt. Dies hat zur Folge, dass einerseits insbesondere auch bei erhöhter Reibung, durch Verschleiß oder Vorbelastung der Riegeleinrichtung eine sichere Verriegelung gewährleistet werden kann. Die vom Fahrzeugbenutzer auf das Bedienelement übertragene Kraft wirkt sowohl für die Ver- als auch für die Entriegelungsbewegung proportional auf den Riegel und gewährleistet somit bei Erhöhung der Bedienkraft eine Erhöhung der wirksamen Riegelkraft während des Ver- und Entriegelungsvorganges. Andererseits entsteht durch eine Zwangsteuerung eine für den Fahrzeugbenutzer sicht- und fühlbare Rückkopplung über den Verriegelungszustand während des Ver- und Entriegelungsvorganges. Jeder Riegelstellung ist auch eine direkt gekoppelte Bedienelementstellung zugeordnet.

In weiterer Ausgestaltung der Erfindung ist mindestens ein Riegel mit einem Federelement zumindest teilweise in oder gegen die Richtung der Verriegelungsbewegung vorgespannt. Federelemente, insbesondere Spiralfedern, Tellerfedern, Bandzugfedern, Torsionsfedern oder Blattfedern, speichern physikalische Arbeit in Form von Deformationsenergie und üben eine Kraftwirkung aus. Dadurch lässt sich je nach konstruktiver Ausführung der Riegeleinrichtung eine besonders benutzerfreundliche Bedienung des Riegels verwirklichen. Dies gilt insbesondere, wenn der Riegel durch Federkraft in einer Verriegelungsposition gehalten werden soll und nur während des Entriegelungsvorganges durch formschlüssig wirkende Betätigungsmittel aus dieser Verriegelungsposition ausgebracht wird.

Ebenfalls denkbar ist eine Variante, bei der der mindestens eine Riegel durch ein Federelement in einer entriegelten Position gehalten wird und durch kraft- oder formschlüssig wirksame Betätigungsmittel in eine Verriegelungsposition gebracht werden kann. Hierbei ergibt sich ebenfalls ein benutzerfreundliches Bedienkonzept, indem die Einbaueinheit ohne Aufbringung einer Betätigungskraft in die fahrzeugfesten Haltevorrichtungen eingesetzt wird und anschließend in einen zweiten Schritt durch Betätigung der Betätigungseinheit eine Kraft auf den Riegel gegen die Federkraft aufgebracht wird, so dass der Riegel in eine Blockierposition gebracht werden kann. Zur Entriegelung muss dann nur noch lediglich die durch Form- oder Kraftfluss aufgebrachte Betätigungskraft so stark reduziert werden, dass die Federkraft den Riegel in die entriegelte Position bewegen kann was insbesondere durch Tastendruck oder Betätigung eines entsprechenden Bedienhebels in einfacher Weise realisiert werden kann.

In weiterer Ausgestaltung der Erfindung wird mindestens ein Riegel mit Blockiermitteln in einer Verriegelungsposition gehalten. Die Blockiermittel wirken entweder unmittelbar auf den Riegel, auf die Betätigungseinheit oder auf die Betätigungsmittel. Durch die Blockiermittel kann verhindert werden, dass der Riegel durch unbeabsichtigte Betätigung oder ungünstige Beaufschlagung mit einer Reaktionskraft oder durch während des Betriebszustandes des Kraftfahrzeuges auftretende Vibrationen aus einer Verriegelungsposition gebracht wird. Die Blockiermittel können kraft- und/oder formschlüssig auf den Riegel wirken. Besonders geeignet sind insbesondere Bolzen, die quer zur Entriegelungsrichtung des Riegels wirken und somit zuverlässig eine Entriegelungsbewegung verhindern. In einer besonders bevorzugten Ausführung sind die Blockiermittel so gestaltet, dass sie selbsthemmend wirken und dadurch bei einer steigenden Belastung auch weiter ansteigende Blockierkräfte erzeugen.

In weiterer Ausgestaltung der Erfindung weist die Betätigungseinheit zur Ver- und/oder Entriegelung ein dreh- oder schiebbares Betätigungselement auf. In Abhängigkeit von der Art der Riegel und der geometrischen Gestaltung der Riegeleinrichtung und der fahrzeugfesten Haltevorrichtung ist eine entsprechende Ansteuerung der Riegel durch ein Betätigungselement notwendig. Betätigungselemente sind insbesondere Drehknöpfe, Hebel, Tasten aber auch Schwenk- oder Klappgriffe. In Abhängigkeit von den Erfordernissen der Verriegelungsbewegung des Riegels können translatorische und rotatorische Bewegungen kombiniert werden. Denkbar ist auch, dass insbesondere für den Verriegelungsvorgang eine rotatorische Bewegung vorgesehen ist, während für den Entriegelungsvorgang eine Kombination aus Translation und Rotation aufgebracht werden muss. Eine derartige Bedienung könnte insbesondere verhindern, dass die Riegeleinrichtung unbeabsichtigt betätigt wird.

In weiterer Ausgestaltung der Erfindung sind Signalisierungsmittel vorgesehen, die einen Verriegelungszustand anzeigen. Gerade bei sicherheitsrelevanten Einbaueinheiten, wie sie insbesondere in Form von Sicherungsnetzen für die Laderaumabtrennung in Kraftfahrzeugen eingesetzt werden, ist eine mittelbare oder unmittelbare Signalisierung eines korrekten Verriegelungszustandes wünschenswert, um den Fahrzeugbenutzer direkt an der Einbaueinheit oder über andere im Fahrzeug angebrachte Signaleinrichtungen darüber zu informieren, ob die von der verriegelten Einbaueinheit erwartete Sicherungswirkung auch tatsächlich erbracht werden kann.

Als Signalisierungsmittel kommen insbesondere optische und akustische Anzeigen in Frage. Bei den optischen Anzeigen kann in besonders vorteilhafter Weise bei Verwendung einer Zwangssteuerung für die Riegel eine Markierung am Betätigungselement vorgenommen werden, die dem Benutzer direkt bei der Betätigung der Betätigungseinheit anzeigt, dass der wunschgemäße Verriegelungszustand erreicht ist. Andere optische Signalisierungsmittel können insbesondere Sichtfenster auf Riegeln oder mit den Riegeln verbundene Zeiger sein, die eine Auskunft über die Riegelposition geben. Eine akustische Signalisierung eines korrekten Verriegelungszustandes kann insbesondere durch ein gut hörbares Knack- oder Klingelgeräusch bei Erreichen der korrekten Verriegelungsposition erreicht werden. Daneben ist auch die Detektion der Riegelpositionen über Sensormittel und eine Übertragung auf elektronischem Wege zu den im Fahrzeug angebrachten Signalisierungsmitteln denkbar.

In weiterer Ausgestaltung der Erfindung ist die Riegeleinrichtung an einer Stirnseite der Einbaueinheit angebracht. Eine derartige Lösung ist insbesondere bei einer langgestreckten Kontur der Einbaueinheit, wie sie bei Kassettengehäusen für Sonnenschutzrollos oder Laderaumabdeckungen vorteilhaft. Dort ist die Stirnseite diejenige Fläche, die im wesentlichen senkrecht zu der Haupterstreckungsrichtung der Einbaueinheit steht. Die Anbringung der Riegeleinrichtung an einer Stirnseite der Einbaueinheit bedeutet insbesondere bei den vorab erwähnten Kassettengehäusen, dass die Verriegelung an einer Seitenfläche des Kraftfahrzeuginnenraumes erfolgt und gleichzeitig eine besonders kompakte Anordnung der Riegeleinrichtung an der Einbaueinheit gewährleistet ist.

Weitere Vorteile und Merkmale der Erfindung ergeben sich aus den Ansprüchen. Nachfolgend sind bevorzugte Ausführungsbeispiele der Erfindung beschrieben und anhand der Zeichnungen dargestellt.
- Fig. 1: In perspektivischer Darstellung eine Innenansicht eines Kombi- Kraftfahrzeuges mit verriegelter Einbaueinheit,
- Fig. 2: in perspektivischer, vergrößerter Darstellung einen Ausschnitt aus dem Innenraum eines Kraftfahrzeuges,
- Fig. 3: in perspektivischer Darstellung ein erstes Ausführungsbeispiel für eine Riegeleinrichtung mit drei Riegeln,
- Fig. 4: in perspektivischer Darstellung ein nicht zur Erfindung gehö- rendes Ausführungsbeispiel für eine Riegeleinrichtung mit Rie- gel und linear bewegbarem Nebenriegel,
- Fig. 5: in perspektivischer Darstellung ein weiteres, nicht zur Erfindung gehörendes Ausführungsbeispiel für eine Riegeleinrichtung mit Riegel und rotatorisch ausschwenkendenden Nebenriegeln,
- Fig. 6: in ebener Darstellung eine schematische Darstellung des nicht zur Erfindung gehörenden Ausführungsbeispiels gemäß Figur 5 für eine Riegelanordnung in Verriegelungsposition,
- Fig. 7: in ebener Darstellung eine schematische Darstellung des nicht zur Erfindung gehörenden Ausführungsbeispiels gemäß Figur 5 für eine Riegelanordnung in Entriegelungsposition,
- Fig. 8: in perspektivischer Darstellung eine erste Variante der Betäti- gungsmittel für das erste Ausführungsbeispiel einer Riegelan- ordnung gemäß Figur 3 und
- Fig. 9: in perspektivischer Darstellung eine zweite Variante der Betäti- gungsmittel für das erste Ausführungsbeispiel einer Riegelan- ordnung gemäß Figur 3.

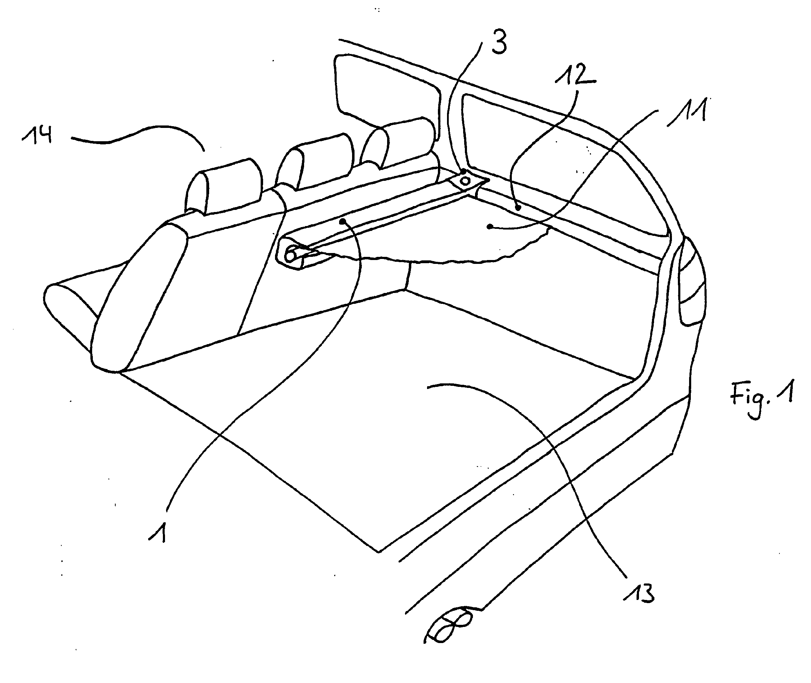

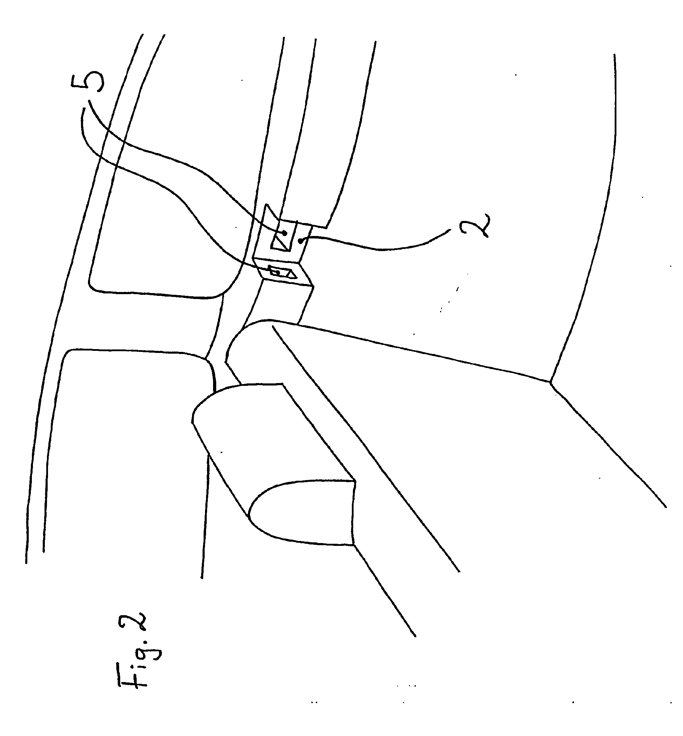

In einem Innenraum eines Kraftfahrzeuges ist in Fig. 1 eine Einbaueinheit 1 werkzeuglos lösbar angebracht. Die Einbaueinheit 1 ist in der Fahrzeugseitenwand 12 über eine Riegeleinrichtung 3 in einer fahrzeugfesten Haltevorrichtung 2 kraftübertragend verriegelt und dient als Kassettengehäuse für eine Laderaumabdeckung 11. Die Laderaumabdeckung 11 dient zur Abtrennung eines Ladebereiches 13 des Kraftfahrzeuges von einem Passagierbereich 14 und hat neben einer Sichtschutzfunktion auch eine Rückhaltefunktion für ungesicherte Ladung. Die in Fig. 2 gezeigte fahrzeugfeste Haltevorrichtung 2 ist an der Fahrzeugseitenwand 12 am vorderen Ende des Ladebereiches 13 vorgesehen. Die fahrzeugfeste Haltevorrichtung weist mehrere, in unterschiedliche Raumrichtungen gerichtete Vertiefungen 5 für den formschlüssigen Eingriff der Riegel 4, 4a, 4b, 4c, 4d, 7a, 7b auf. Die Riegeleinrichtung 3, 3a, 3b kann erfindungsgemäß mit verschiedenen Riegeln 4, 4a, 4b, 4c, 4d, 7a, 7b versehen sein.

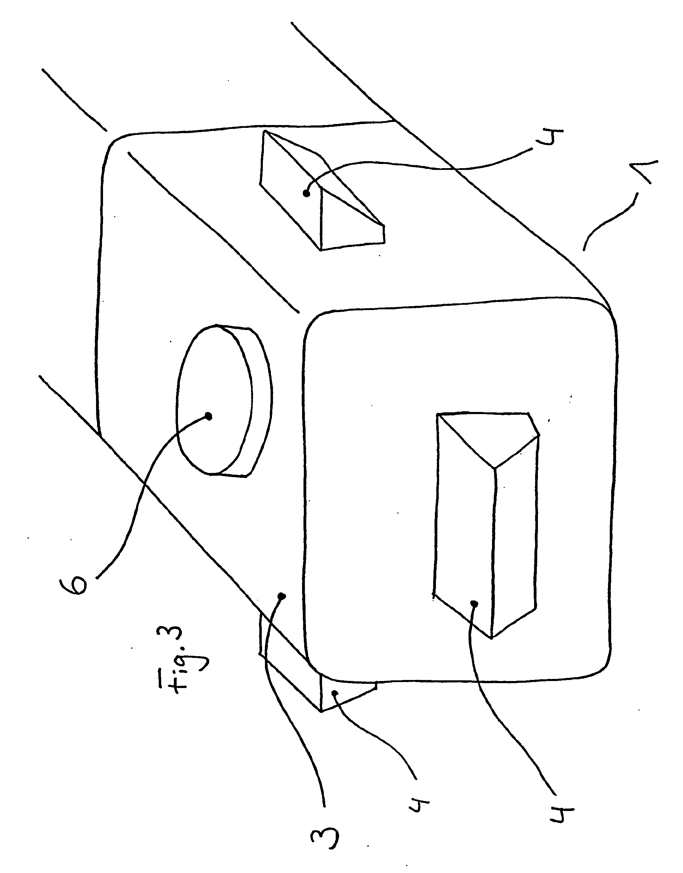

In Fig. 3 ist eine Riegeleinrichtung dargestellt, die drei Riegel 4 aufweist, von denen einer stirnseitig an der Einbaueinheit 1 angeordnet ist, während zwei einander gegenüberliegende Riegel 4 senkrecht zur Haupterstreckungsrichtung der Einbaueinheit 1 ausgerichtet sind. Alle in Fig. 3 dargestellten Riegel 4 sind linear beweglich und weisen eine Abschrägung an der Vorderseite auf, die das Einsetzen und Verriegeln in der Haltevorrichtung 2 erleichtert. Die Riegel 4 werden über die Betätigungseinheit 6 angesteuert und zur Entriegelung in die Riegleinrichtung 3 zurückgezogen.

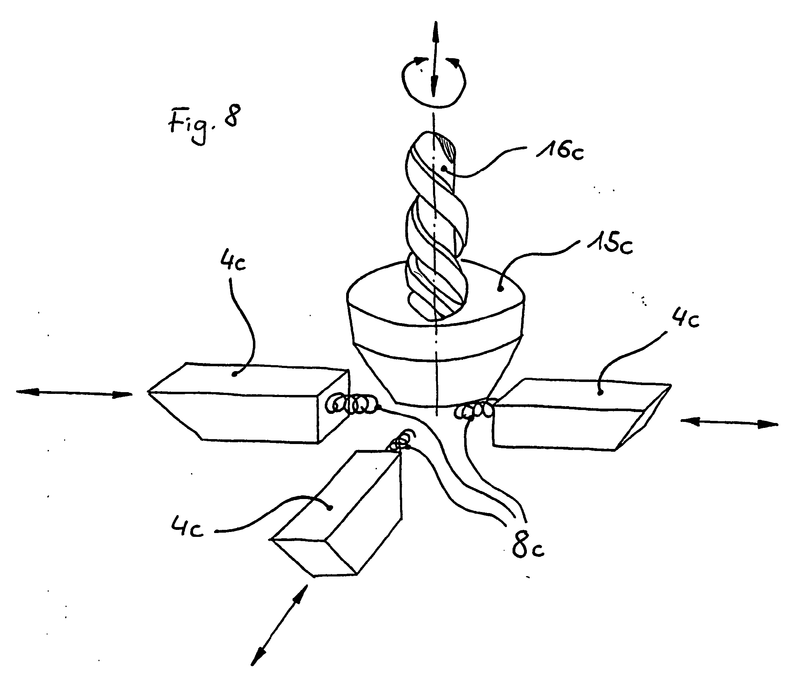

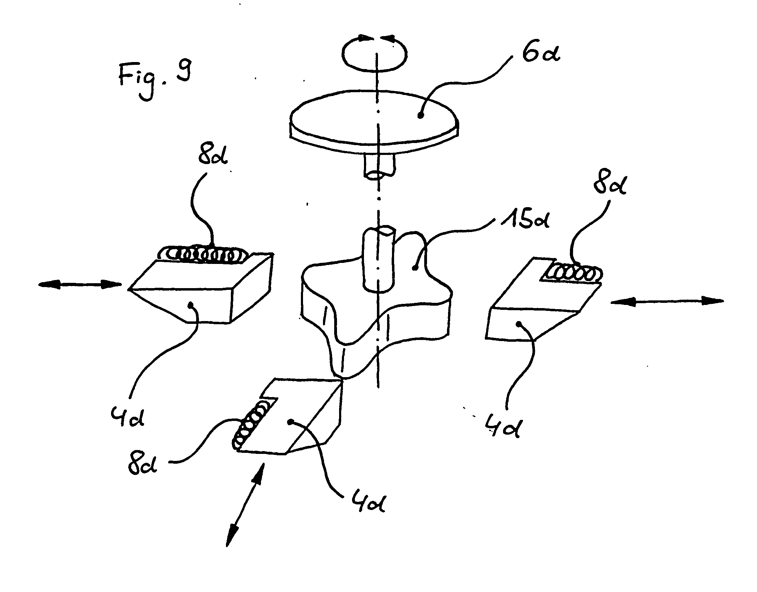

Der Ver- und Entriegelungsvorgang der in Fig. 3 gezeigten Riegel kann durch formschlüssig wirkende Betätigungsmittel 15c, 15d der Betätigungseinheit bewirkt werden, wie sie in Fig. 8 und 9 dargestellt sind. Durch das in Fig. 8 dargestellte konische Betätigungsmittel 15c wird bei Aufbringen eines Drehmomentes durch den Fahrzeugbenutzer auf die nicht dargestellte Betätigungseinheit eine Rotation der Spindel 16c bewirkt, die sich in der ebenfalls nicht dargestellten Riegeleinrichtung abstützt und somit eine kombinierte translatorisch-rotatorische Bewegung ausführt. Dadurch wird der konische Bereich des Betätigungsmittels 15c auf die Rückseiten der Riegel 4c gepresst und bewirkt durch eine Keilwirkung eine Kraft auf die Riegel 4c, die der Federkraft der vorgespannten Federelemente 8c entgegenwirkt, so dass eine lineare Bewegung der Riegel 4c in Verriegelungsrichtung bewirkt wird. Zur Entriegelung wird durch den Fahrzeugbenutzer ein Drehmoment so auf die Betätigungseinheit aufgebracht, dass der konische Bereich des Betätigungsmittels 15c nach oben bewegt wird und die Kraftwirkung auf die Riegel 4c abnimmt, wodurch die Riegel 4c durch die Federkraft der Federelemente 8c in die Entriegelungsposition zurückbewegt werden.

Bei der in Fig. 9 dargestellten Betätigungseinheit wird das durch den Fahrzeugbenutzer in das Betätigungselement 6d eingeleitete Drehmoment auf ein kreuzförmiges Betätigungsmittel 15d aufgebracht, das eine Nockenkontur aufweist und mittels dieser Nocken eine Bewegung der Riegel 4d bewirkt. Vorteilhaft ist hier, dass keine Drehrichtung für das durch den Fahrzeugbenutzer aufzubringenden Drehmoment eingehalten werden muss, da sich durch das symmetrische Betätigungsmittel 15d eine Abfolge von Ver- und Entriegelungsstellungen in beiden Drehrichtungen ergibt.

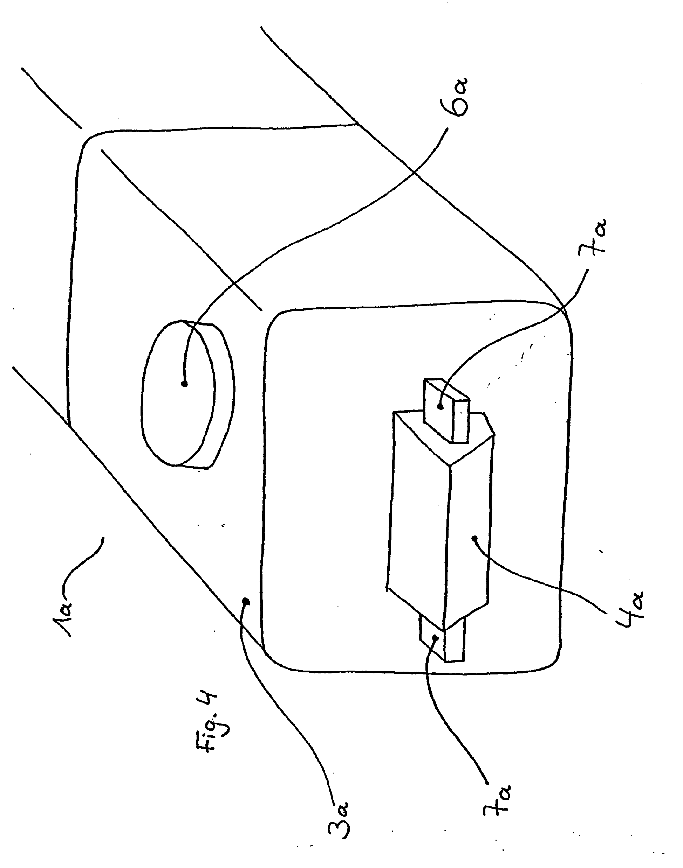

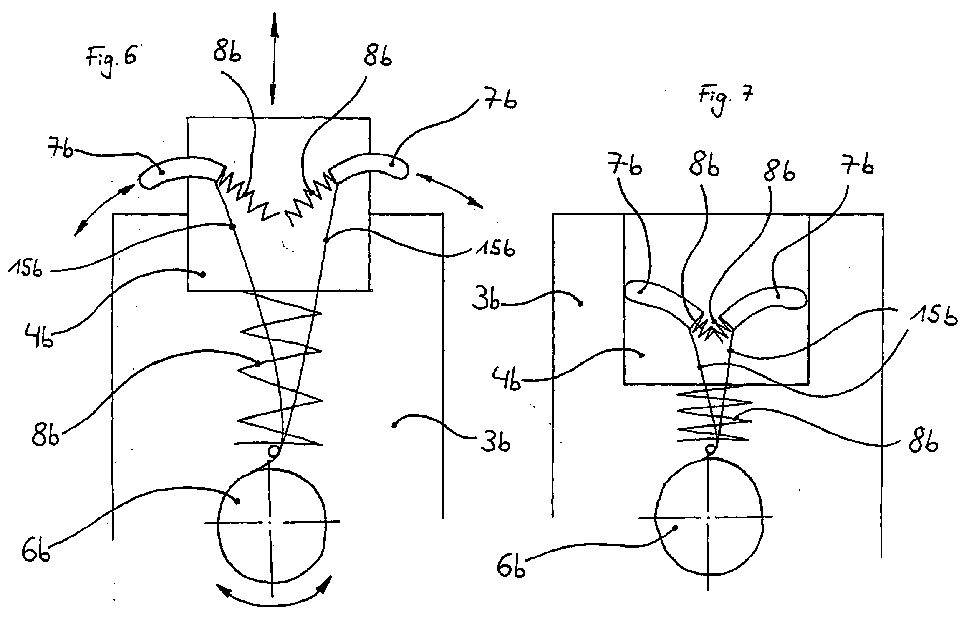

In Fig. 4 ist eine nicht zur Erfindung gehörende Riegeleinrichtung 3a dargestellt, die einen Riegel 4a aufweist, der mit zwei Nebenriegeln versehen ist. Der Riegel 4a und die Nebenriegel 7a befinden sich in einer Verriegelungsposition, zur Entriegelung werden zuerst die Nebenriegel 7a linear in den Riegel 4a eingefahren, anschließend kann der Riegel 4a in die Riegleinrichtung 3a ebenfalls linear zurückgefahren werden. Die Bewegung der Nebenriegel und des Riegels kann in einer nicht dargestellten Abwandlung der in Fig. 6 und 7 gezeigten Betätigungsmittel erfolgen.

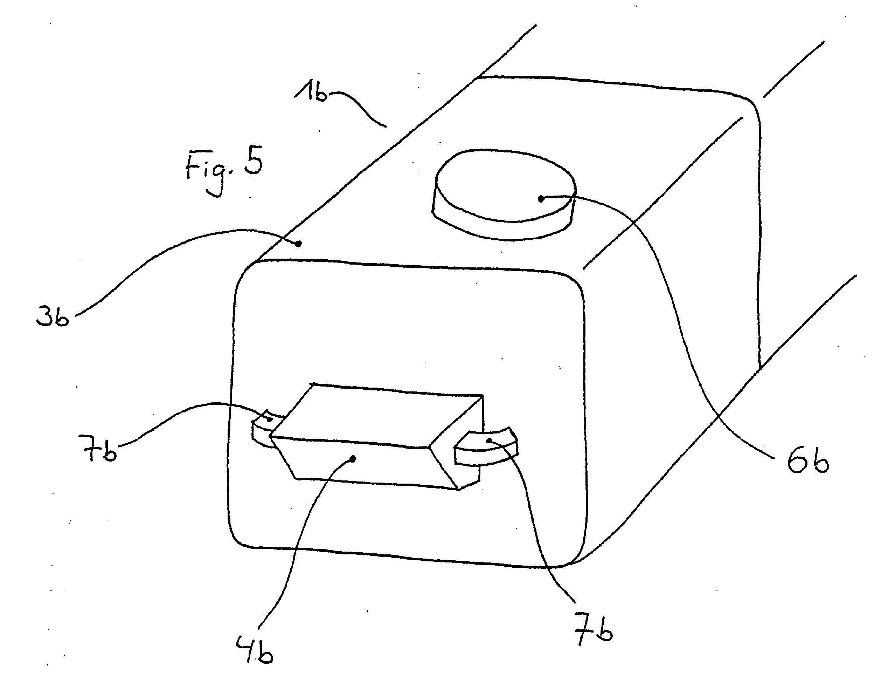

In Fig. 5 ist eine nicht zur Erfindung gehörende Riegeleinrichtung 3b dargestellt, bei der der Riegel 4b eine lineare Riegelbewegung ausführt, während die Nebenriegel 7b eine Kurvenbewegung zur Erzielung der Verriegelung beschreiben. Hier ist ebenso wie in Fig. 4 eine festgelegte Reihenfolge der Riegelbewegung notwendig, um zu einer sicheren Ver- und Entriegelung zu kommen. Die Betätigungsmittel 15b für die Erzeugung einer kombinierten Kurven- und Linearbewegung sind in Fig. 6 und 7 dargestellt.

An dem Betätigungselement 6b sind Betätigungsmittel 15b in Form von Seilzügen befestigt, die mit den Nebenriegeln 7b verbunden sind. In einer Verriegelungsposition nach Fig. 6 sind die Betätigungsmittel nahezu entspannt, wodurch der Riegel 4b und die Nebenriegel 7b durch die jeweils angebrachten Federelemente 8b in die Verriegelungsposition gedrückt werden. Die Entriegelung wird bewirkt, indem ein Drehmoment auf das Betätigungselement 6b aufgebracht wird. Dadurch werden die Seilzüge auf das Betätigungselement 6b aufgewickelt und können somit eine Zugkraft auf den Riegel und die Nebenriegel ausüben.

Die der Zugkraft entgegenwirkenden Federkräfte der Federelemente 8b sind so aufeinander abgestimmt, dass sich zuerst die Nebenriegel 7b in Bewegung setzen und in den Riegel 4b eingefahren werden. Dann wird durch weiteres Drehen des Betätigungselementes 6b die Zugkraft auf den Riegel weiter erhöht, so dass auch die Gegenkraft des Federelementes 8b des Riegels 4b überwunden werden kann, wodurch sich dieser in die Riegeleinrichtung 3b bewegt. Durch die Kompression der Federelemente 8b wird die vom Fahrzeugbenutzer aufgebrachte Energie gespeichert und kann für einen neuerlichen Verriegelungsvorgang genutzt werden.

## Patentansprüche

1. Einbaueinheit (1) für ein Kraftfahrzeug, die mit mindestens einer fahrzeugfesten Haltevorrichtung (2) mittels mindestens einer Riegeleinrichtung (3) lösbar verbunden ist, die jeweils mindestens zwei Riegel (4, 4c, 4d) aufweist, die in unterschiedlichen Richtungen beweglich gelagert sind, **dadurch gekennzeichnet, dass** drei Riegel (4, 4c, 4d) vorgesehen sind, von denen einer stirnseitig an der Einbaueinheit (1) angeordnet ist und zwei einander gegenüberliegende Riegel (4, 4c, 4d) senkrecht zu einer Haupterstreckungsrichtung der Einbaueinheit (1) ausgerichtet sind.

2. Einbaueinheit nach Anspruch 1, **dadurch gekennzeichnet, dass** die Riegel (4, 4c, 4d) unabhängig voneinander beweglich gelagert sind.

3. Einbaueinheit nach Anspruch 1, **dadurch gekennzeichnet, dass** mindestens ein Riegel (4, 4c, 4d) durch eine Führungseinrichtung derart angesteuert ist, dass er eine lineare und/oder rotatorische Verriegelungsbewegung durchführt.

4. Einbaueinheit nach einem der voranstehenden Ansprüche, **dadurch gekennzeichnet, dass** die Führungseinrichtung eine Betätigungseinheit (6, 6d) aufweist, die den Riegel zur Ver- und/oder Entriegelung kraft- und/oder formschlüssig ansteuert.

5. Einbaueinheit nach einem der voranstehenden Ansprüche, **dadurch gekennzeichnet, dass** die Betätigungseinheit Zwangssteuerungsmittel aufweist, die zur Ver- und/oder Entriegelung auf den mindestens einen Riegel (4, 4c, 4d) wirken.

6. Einbaueinheit nach einem der voranstehenden Ansprüche, **dadurch gekennzeichnet, dass** mindestens ein Riegel (4, 4c, 4d) mit einem Federelement (8, 8c, 8d) zumindest teilweise in oder gegen die Richtung der Verriegelungsbewegung vorgespannt ist.

7. Einbaueinheit nach einem der voranstehenden Ansprüche, **dadurch gekennzeichnet, dass** mindestens ein Riegel (4, 4c, 4d) mit Blockiermitteln in einer Verriegelungsposition gehalten werden.

8. Einbaueinheit nach einem der voranstehenden Ansprüche, **dadurch gekennzeichnet, dass** die Betätigungseinheit (6, 6d) zur Ver- und/oder Entriegelung ein dreh- oder schiebebewegliches Betätigungselement aufweist.

9. Einbaueinheit nach einem der voranstehenden Ansprüche, **dadurch gekennzeichnet, dass** Signalisierungsmittel vorgesehen sind, die einen Verriegelungszustand anzeigen.

10. Einbaueinheit nach einem der voranstehenden Ansprüche, **dadurch gekennzeichnet, dass** die Riegeleinrichtung (3) an einer Stirnseite der Einbaueinheit (1) angebracht ist.

## Claims

1. Fitted unit (1) for a motor vehicle detachably connected to at least one holding device (2) fixed to the vehicle by means of at least one lock bolt device (3) each having at least two lock bolts (4, 4c, 4d) mounted movable in different directions, **characterized in that** three lock bolts (4, 4c, 4d) are provided, one of which is arranged on the end face of the fitted unit (1) and two opposite lock bolts (4, 4c, 4d) are aligned perpendicular to a main extension direction of the fitted unit (1).

2. Fitted unit according to Claim 1, **characterized in that** the lock bolts (4, 4c, 4d) are mounted movable independently of one another.

3. Fitted unit according to Claim 1, **characterized in that** at least one lock bolt (4, 4c, 4d) is controlled by a guide device such that it performs a linear and/or rotational locking movement.

4. Fitted unit according to one of the preceding claims, **characterized in that** the guide device has an actuating unit (6, 6d) operating the lock bolt for locking and/or unlocking non-positively or positively.

5. Fitted unit according to one of the preceding claims, **characterized in that** the actuating unit has forced control means acting on the at least one lock bolt (4, 4c, 4d) for locking and/or unlocking.

6. Fitted unit according to one of the preceding claims, **characterized in that** at least one lock bolt (4, 4c, 4d) is pretensioned with a spring element (8, 8c, 8d) at least partially in or against the direction of the locking movement.

7. Fitted unit according to one of the preceding claims, **characterized in that** at least one lock bolt (4, 4c, 4d) is held in a locking position by blocking means.

8. Fitted unit element according to one of the preceding claims, **characterized in that** the actuating unit (6, 6d) has a rotatably or slidably movable actuating unit for locking and/or unlocking.

9. Fitted unit according to one of the preceding claims, **characterized in that** signal means are provided that indicate a locked state.

10. Fitted unit according to one of the preceding claims, **characterized in that** the lock bolt device (3) is attached to an end face of the fitted unit (1).

## Revendications

1. Unité de montage (1) pour un véhicule automobile, qui est reliée de manière détachable à au moins un dispositif de fixation (2) solidaire du véhicule par au moins un dispositif de verrouillage (3) qui présente respectivement au moins deux verrous (4, 4c, 4d) qui sont logés de manière mobile dans différentes directions, **caractérisée en ce que** sont prévus trois verrous (4, 4c, 4d), dont l'un est placé sur la face avant de l'unité de montage (1), et deux verrous opposés (4, 4c, 4d) sont orientés perpendiculairement à une direction d'extension principale de l'unité de montage (1).

2. Unité de montage selon la revendication 1, **caractérisée en ce que** les verrous (4, 4c, 4d) sont logées de manière mobile indépendamment les uns des autres.

3. Unité de montage selon la revendication 1, **caractérisée en ce qu'**au moins un verrou (4, 4c, 4d) est commandé par un dispositif de guidage de manière telle qu'il décrit un mouvement de verrouillage linéaire et/ou rotatif.

4. Unité de montage selon l'une des revendications précédentes, **caractérisée en ce que** le dispositif de guidage présente une unité d'actionnement (6, 6d) qui commande le verrou par force et/ou complémentarité de forme pour le verrouillage et/ou le déverrouillage.

5. Unité de montage selon l'une des revendications précédentes, **caractérisée en ce que** l'unité d'actionnement présente des moyens de commande forcé, qui agissent sur l'au moins un verrou (4, 4c, 4d) pour le verrouillage et/ou le déverrouillage.

6. Unité de montage selon l'une des revendications précédentes, **caractérisée en ce qu'**au moins un verrou (4, 4c, 4d) est soumis au moins partiellement à une tension initiale par un élément élastique (8, 8c, 8d) dans le même sens ou dans le sens contraire du mouvement de verrouillage.

7. Unité de montage selon l'une des revendications précédentes, **caractérisée en ce qu'**au moins un verrou (4, 4c, 4d) est maintenu dans une position de verrouillage par des moyens de blocage.

8. Unité de montage selon l'une des revendications précédentes, **caractérisée en ce que** l'unité d'actionnement (6, 6d) présente un élément d'actionnement mobile en rotation ou en translation pour le verrouillage et/ou le déverrouillage.

9. Unité de montage selon l'une des revendications précédentes, **caractérisée en ce que** sont prévus des moyens de signalisation qui indiquent un état de verrouillage.

10. Unité de montage selon l'une des revendications précédentes, **caractérisée en ce que** le dispositif de verrouillage (3) est disposé sur une face frontale de l'unité de montage (1).
